Europäisches Patentamt

European Patent Office

Office européen des brevets

(19)

(11) Publication number: **0 151 819**
**B1**

(12) # EUROPEAN PATENT SPECIFICATION

(45) Date of publication of patent specification: **15.03.89**

(51) Int. Cl.⁴: **B 25 J 15/04**

(21) Application number: **84200820.3**

(22) Date of filing: **12.06.84**

(54) **Mechanism for automatic changing of tools on industrial robots.**

(30) Priority: **13.02.84 IT 6713084**

(43) Date of publication of application:
**21.08.85 Bulletin 85/34**

(45) Publication of the grant of the patent:
**15.03.89 Bulletin 89/11**

(84) Designated Contracting States:
**AT BE CH DE FR GB LI LU NL SE**

(56) References cited:
**EP-A-0 021 249**
**EP-A-3 003 748**

(73) Proprietor: **BISIACH & CARRU' S.p.A.**
**Corso Lombardia, 21**
**I-10078 Venaria (Turin) (IT)**

(72) Inventor: **Bisiach, Luciano**
**Strada Comunale San Vito-Revigliasco, 350**
**I-10133 Turin (IT)**

(74) Representative: **Robba, Eugenio**
**Studio "INTERPATENT" via Caboto 35**
**I-10129 Turin (IT)**

Courier Press, Leamington Spa, England.

# Description

The present invention relates to a mechanism for automatic changing of the tool for industrial robots so as to permit programmed replacement of the tool during machining without human intervention and without interruptions of the working cycle of the robot. The invention is particularly advantageous in the case of bulky or heavy tools and/or tools requiring burdensome connections for power, signals, operative fluids such as water, compressed air, etc., as in the case where the tool is constituted by resistance welding guns or welding yokes although the invention is not limited to such applications.

Hitherto the operation of changing the tool, in particular the welding gun, had to be carried out manually by an operator during a stop of the machine and thus could not be included in automated working cycles. Thus, the industrial robot, which had been developed to provide maximum operative versatility thanks to its great freedom of movement, in practice was paradoxically limited in its efficacy by the necessity of having to use one tool for the entire programmed working cycle unlike other numerically controlled machine tools of far less agility such as the so-called machining centres the very attraction of which consists in the possibility of using successively different tools taken from a toolholder magazine during the cycle of working on a workpiece.

It would therefore be desirable to provide the industrial robot with the possibility of changing the tool rapidly and automatically during the programmed cycle in the same manner as is already done in machining centres so that the industrial robot would itself acquire the characteristics of a machining centre. The attempts hitherto made for automatically changing the tool on industrial robots have thus proved unsuccessful, particularly in the field of welding.

In fact, in the case of welding robots, on the one hand, one works with particularly heavy and bulky welding guns, which in themselves constitute a heavy strain on the sturdiness of the head of the robot, and on the other hand, for changing the tool it is necessary to interrupt and subsequently restore numerous service connections for the tool (such as compressed air, cooling water, etc.) including feeding of current of tens of thousands of amperes at low tension to the gun.

Now, it is the object of the present invention to provide a mechanism which permits to effect the change of a tool on an industrial robot automatically and rapidly under the control of the programmed cycle without rendering the tool holder head of the robot unduly heavy or bulky.

Another object is to provide such a mechanism which is capable of effecting in a simple and reliable manner the interruption and restoration of the service connections of the tool, in particular the feeding of electric power, even with heavy currents and low tensions.

The above and other objects and advantages of the invention, which will become apparent from the following description, are achieved by a mechanism for automatic changing of tools for industrial robots with a head having several axes of movement and provided with a toolholder end flange, characterized in that it comprises:

a) a connection plate firmly secured to the tool and having a projection provided with a plurality of radial lugs and a corresponding plurality of elastically compressible pressers mounted respectively on each radial lug;

b) a device for coupling the tool to the robot by means of the connection plate, said device comprising a hollow cylinder firmly anchored to the end flange of the head of the robot, said hollow cylinder comprising an annular surface adapted to abut against said projection of the connection plate of the tool and a cylindrical outer surface on which a crown is rotatably supported which frontally has a plurality of claws adjacent said radial lugs of the connection plate and peripherally engagement means engageable for rotating the crown by means of an external actuator from a first unlocked position to a second locked position and vice versa; said hollow cylinder further comprising a plurality of front recesses suitable to receive said plurality of elastically compressible pressers to prevent relative rotation between said connection plate and cylinder;

c) a toolholder magazine comprising a frame adapted to be arranged in a predetermined fixed position with respect to the robot and to accommodate a tool with said connection plate in a predetermined position and having an actuator member adapted to engage said engagement means on the crown when the coupling device is in a position abutting said projection for rotating the crown from the unlocked position to the locked position and vice versa;

so that by moving the coupling device frontally close to the connection plate of the tool located in the magazine, with the crown in the unlocked position, the claws are released by said radial lugs and the engagement means of the crown are gripped by said actuator member of the magazine, and so that, when the actuation of said actuator member moves the crown into the locked position, said claws move behind the radial lugs and grip the elastic pressers to create a reaction pressure between said annular surface of said hollow cylinder and the projection whereas actuation of the actuator member in the opposite direction moves the crown back into the unlocked position to release said claws and thus the coupling device from said connection plate.

A further important characteristic of the invention, wherein the robot is of the type with two electric power feeding conductors passing through the head, consists in that.

a) the hollow cylinder has in its central area a pair of plates provided with respective opposed electric contact surfaces extending parallel to the axis of the hollow cylinder, with said plates connected to said conductors, and respective claws each facing one of said plates and carried by pressure means mounted on the hollow cylinder and adapted to move the claws against the plates under the action of the rotation of the crown from the unlocked position to the locked position; and

b) the connection plate of the tool carries a pair of electric contact plugs yieldingly supported in such position as to be each inserted between a plate and a claw when the coupling device moves frontally up to the connection plate of the tool with the crown in the unlocked position, to be compressed between the claws and the plates as they move into the locked position of the crown.

The invention will now he described merely by way of a non-limiting example with reference to the accompanying drawings, in which:

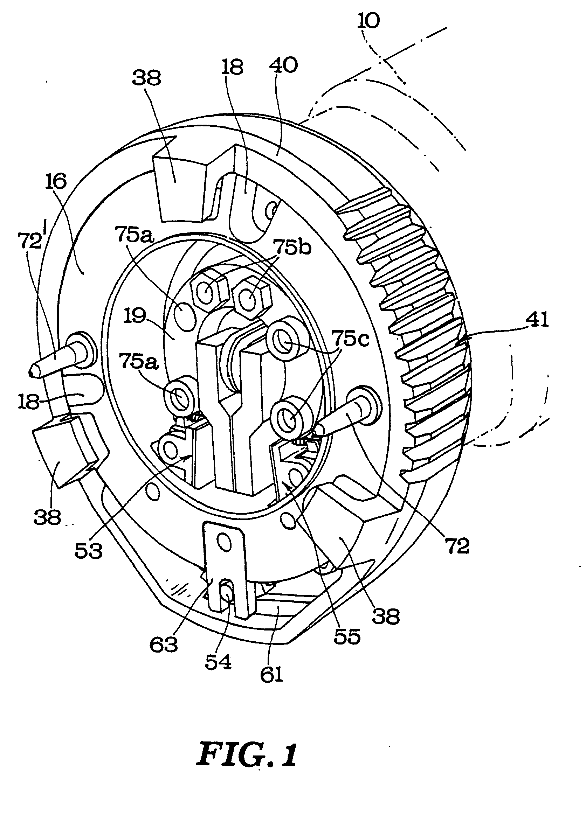

Fig. 1 is a perspective view of a tool coupling device to be mounted on the head of a welding robot, this device forming part of a tool changing mechanism according to a preferred embodiment of the invention in which the tool is constituted by a welding gun;

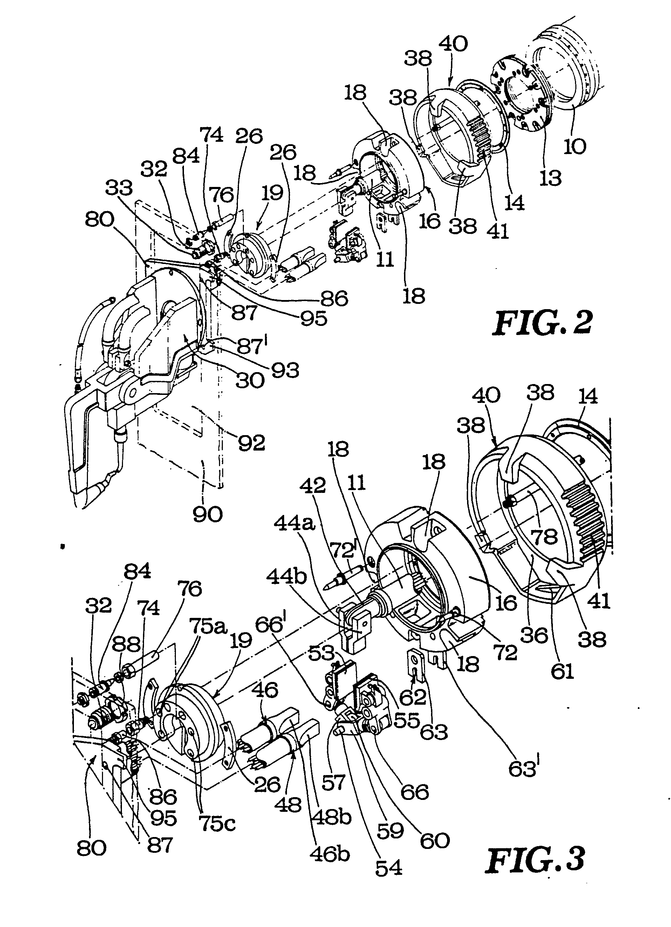

Fig. 2 is an exploded perspective wiew of the mechanism according to the preferrred embodiment of the invention;

Fig. 3 is an enlarged view of a portion of the mechanism of Fig. 2;

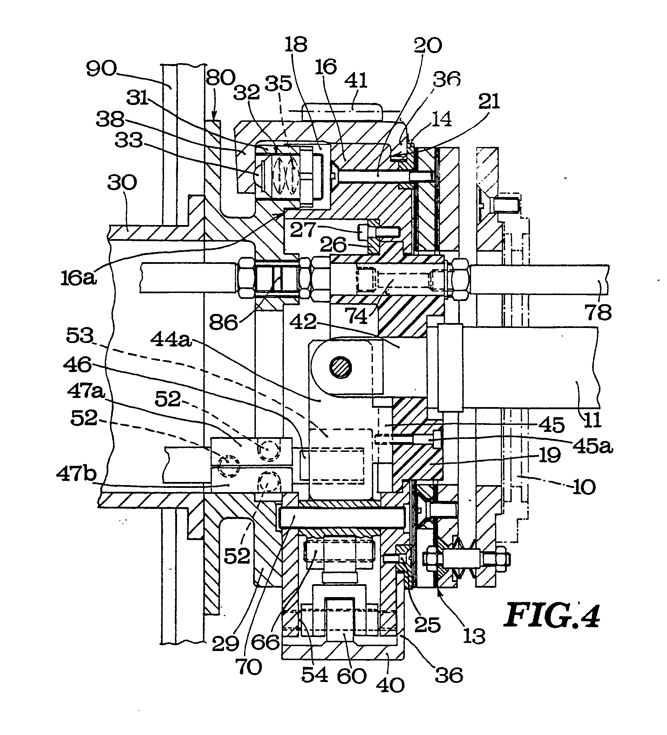

Fig. 4 is a view in an axial section of the overall mechanism in the mounted condition;

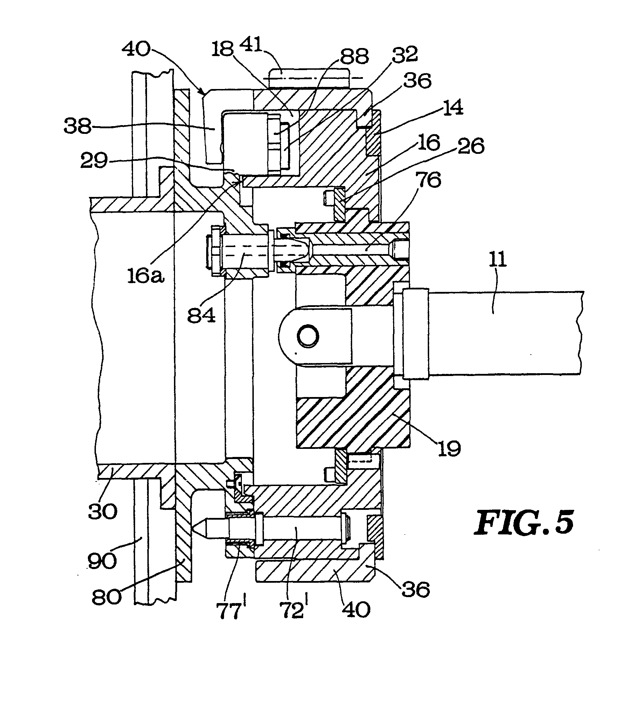

Fig. 5 is a view in an axial section similar to Fig. 4, but with the section taken on different planes;

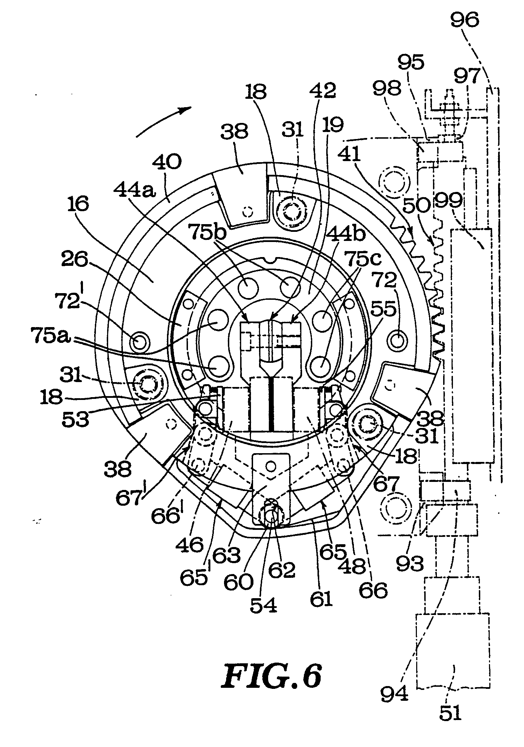

Fig. 6 is a front view of the device of Fig. 1 in the unlocked position of operation, showing external actuator means;

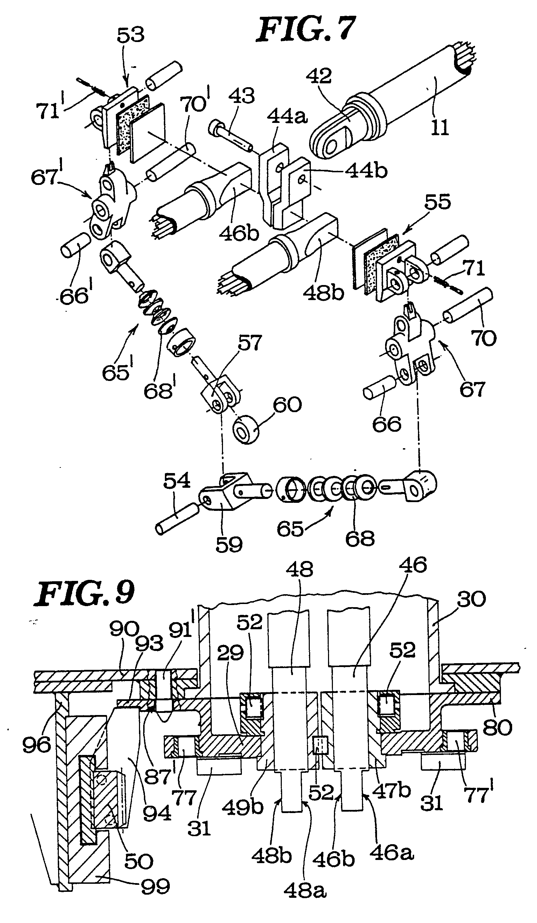

Fig. 7 is an enlarged exploded view of pressure means forming part of the device of Fig. l;

Fig. 8 is a front view of a tool connection plate accommodated in a toolholder magazine and forming part of the preferred embodiment of the mechanism according to the invention;

Fig. 9 is a view in section taken along the line IX-IX of Fig. 8;

Fig. 10 is a view similar to Fig. 6, but in the locked position of operation;

Fig. 11 is a perspective view of a toolholder magazine forming part of the invention; and

Fig. 12 is a perspective view similar to Fig. 11, but with the tool located in the magazine.

With reference to the Figures, the head 10 of a welding robot according to Applicants' prior Italian Patent No. IT-B-1,083,111 is of the hollow type and accommodates in its interior current feeding conductors 11 as well as water and compressed air feeding pipes as 78. The head 10 carries a toolholder end flange 13.

According to the invention a hollow cylinder 16 is secured to the end flange 13 by screws as 20, this cylinder having forwardly an annular projection 16a defining a central cylindrical cavity. A crown 40 is rotatably mounted on the peripheral jacket of the hollow cylinder 16 and is axially retained by an edge 36 engaging between a shoulder 21 of the hollow cylinder 16 and a retaining ring 14 secured by screws 25. Forwardly the crown 40 has three undercut claws 38 spaced at 120°. The outer surface of the crown 40 has a toothed segment 41. The hollow cylinder 16 has three front recesses 18 and two plugs 72, 72' extending parallel to the axis of the hollow cylinder for purposes which will be described hereinafter.

A cylindrical body 19 of plastics material is accommodated in the central cavity of the hollow cylinder 16 and is retained by plates 26 secured by screws 27. The cylindrical body 19 is traversed by the bipolar end 42 of the current feed cable 11. Secured to the end 42 by means of a pin 43 are two conductor plates 44a and 44b extending radially and having plane parallel outer contact surfaces with rearward projections 45 for supporting them on the body 19, the projections 45 being anchored by screws as 45a.

Further, pressure means are mounted in the hollow cylinder 16 for clamping electric contact plugs (described hereinafter) against the contact surfaces of the plates 44, these pressure means comprising two plane claws 53, 55 carried by respective rocker arms 67, 67' hinged on pivots 70, 70' firmly secured to the hollow cylinder, with the rocker arms arranged symmetrically with respect to the plates 44 and their opposed ends articulated to arms or struts 65, 65' by means of pivots 66, 66'. The opposite ends of the struts 65, 65' are fork-shaped as shown at 57, 59 and connected to each other by means of a pivot 54 carrying a cam follower 60. The latter engages a cam surface 61 provided on the crown 40 so that the cam follower will move toward the axis of the hollow cylinder 16 during the rotation between an unlocked position and a locked position. The pivot 54 is guided by slots 62 provided in plates 63, 63' secured to the hollow cylinder 16. The claws 53, 55 are yieldingly retained by springs 71, 71' in substantially parallel positions relative to the plates 44. The struts 65, 65' are elastically compressible due to respective series of Belleville springs 68, 68' which form their axial bodies.

The body 19 has several holes 75a, 75b, 75c which accommodate connectors 74, 76 for the cooling circuits (water) and feeding of compressed air to the tool, these connectors being connected to pipes as 78 passing through the hollow head of the robot.

Now the connection plate with which the gun 30 is provided according to the teachings of the invention will be described.

Firmly secured to the gun 30 is a connection plate 80 having a pair of holes 87, 87' and a central projection 29 provided with three equidistantly spaced radial lugs 31 each mounting an elastic presser comprising a cartridge 32 accommodating Belleville springs 35 acting on pressure balls 33 acting in a direction opposed to the front of the projection 29. The cartridges are mounted on the lugs 31 by means of ring nuts 88. The projection 29 has two holes 77, 77' arranged to be coupled to the plugs 72, 72' of the hollow cylinder 16 when the latter is moved frontally toward the plate as will be described hereinafter. Further, the projection 29 has connectors 84, 86 corresponding to the connectors 74, 76 of the body 19 and connected to the appropriate circuits of the gun or other associated tool. The connectors of the cooling circuit are preferably provided with check valves.

The projection 29 is provided with an aperture in which two insulating tabs 47, 49 are mounted each of which is formed of two portions 47a, 47b and 49a, 49b which are depressed to form retaining seats for plugs 46 and 48 constituting the electric connection terminals of the power circuit of the gun 30. The tabs 47, 49 are sprung by elastic elements 52, preferably of rubber, adapted to impart resiliency to the location of the plugs. The plugs terminate forwardly with a flattened cross section 46a, 46b and 48a, 48b and are spaced from each other so as to fit between the plates 44 and the respective claws 53, 55 when the hollow cylinder 16 is moved frontally toward the projection 29 as will be described hereinafter.

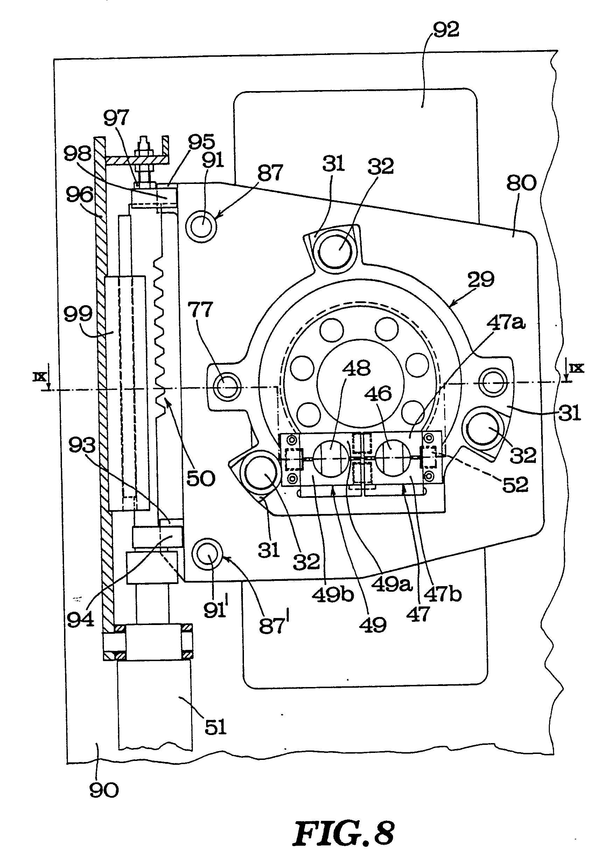

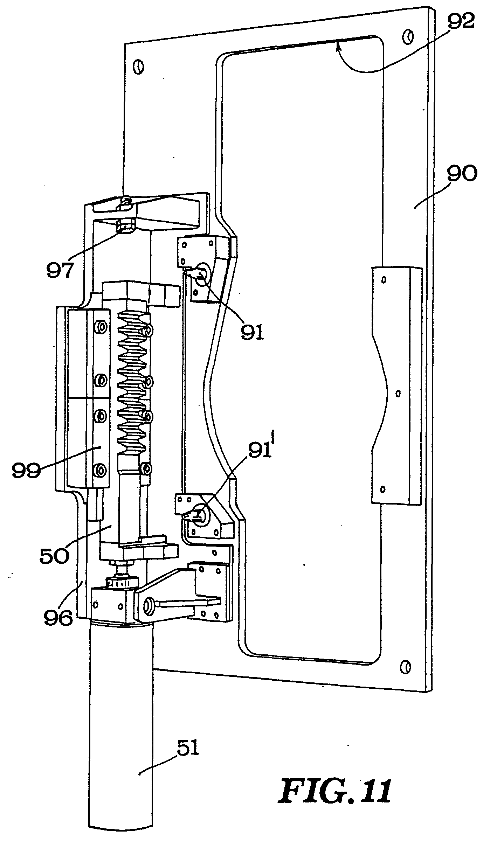

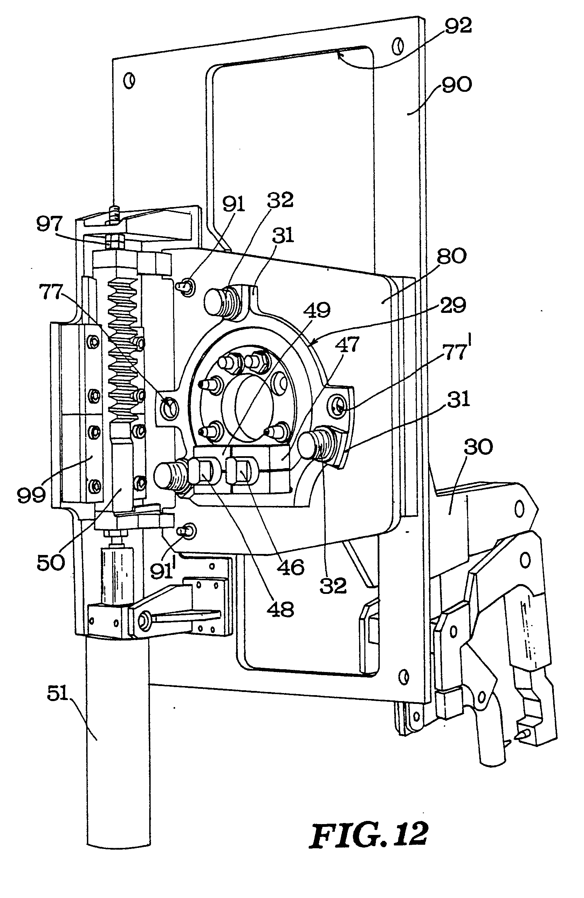

With particular reference to Figs. 8, 9, 11 and 12, the connection plate 80 firmly secured to the tool 30 is adapted to be received in a toolholder magazine constituted by a frame 90 having a sufficiently wide aperture 92 to permit the tool to pass but not the plate 80. The frame 90 is mounted in a predetermined fixed position with respect to the robot to permit frontal approach of the head of the latter. Two pins 91, 91' firmly secured to the frame 90 fit in the holes 87 of the plate 80 to support and locate the latter.

The magazine 90 comprises an actuator for the crown 40, which is composed of a pneumatic cylinder 51 whose rod is firmly secured to a rack 50 and two tabs 94 and 98. The rack is contained by the guide 99 firmly secured to the magazine by an upright support member 96 provided with a bracket carrying an abutment 97 for adjusting the stroke of the rack which in the unlocked position engages said abutment. Two tabs 94, 98 are firmly secured to the rack.

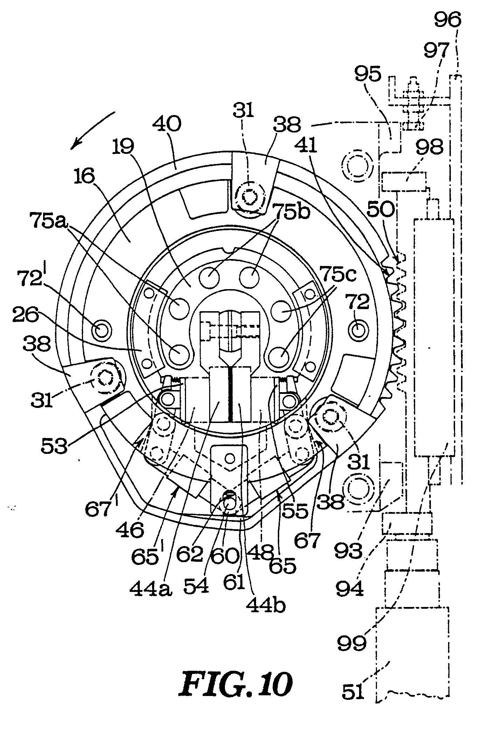

Now the operation of the described mechanism will be described. With the tool located on the magazine 90 (Figs. 8, 9 and in particular 12), the head 10 without tool and the crown 40 in the unlocked position, the control of the robot moves the coupling device mounted on the head 10 (comprising the hollow cylinder 16, the central body 19 and the crown 40) frontally toward the projection 29 of the plate 80, with the plugs 72, 72' aligned with the corresponding holes 77, 77' on the projection, until the plugs are engaged in the holes. The rack 50 engages the abutment 97 with the tabs 94, 98 engaging the plate 80 to prevent it from tilting away from the magazine. The abutment 97 has been previously adjusted so that the teeth 41 of the crown 40 will fit in without interference between the teeth of the rack while the claws 38 pass free of the radial lugs 31 along the profile of the projection 29 and the pressers 32 projecting from the lugs are received in the recesses 18. At the same time the plugs 46, 48 are inserted between the plates 44 and the jaws 53, 55 while the various connectors on the body 19 and the projection 29 snugly fit one another to establish the auxiliary connections.

When the control program of the system actuates the actuator cylinder 51 to remove the rack 50 from the abutment 97, the crown 40 is rotated into the locked position to move the claws 38 behind the lugs 31 against the action of the pressers. The reaction presses the annular surface 16a of the hollow cylinder 16 against the projection 29 and this together with the engagement of the plugs 72, 72' in the holes 77, 77' ensures a firm connection of the plate 80 with the head of the robot to form a rigid assembly.

During the locking operation the cam surface 61 of the crown acts on the cam follower 60 to urge the claws 53, 55 against the plugs 46, 48 with a high clamping force thanks to the elasticity of the struts 65, 65', this force being independent of play or tolerances due to wear of the parts. The spring elements 52 between the tabs 47, 49 permit the plugs to yield without strain to said clamping pressure and to adapt themselves to the contact surfaces.

The translation of the rack 50 further releases the retaining tabs 94, 98 from their engagement with the plate 80, rendering the latter free to be removed from the support pins 91, 91' and thus from the magazine when the head of the robot moves away in the same direction in which it had approached.

For re-depositing the tool in the magazine, the control program moves the head of the robot again close to the magazine so that the tool can pass beyond the frame, the pins 91, 91' are inserted in the holes 87, 87' of the plate 80 and the teeth 41 of the crown mesh with the rack 50 which was left in the locked position. The actuation of the actuator cylinder and its movement to the unlocked position moves the tabs 94, 98 back into the plate retaining position while the claws 38 of the crown are released from the radial lugs and the claws open to release the plugs. Now the head of the robot can move away leaving the tool in the magazine.

Thus, with the described mechanism the tool on an industrial robot can be changed under the control of the working program by mounting on the head a coupling device of reduced overall dimensions and weight thanks to the fact that its actuator means, instead of being arranged on the head, are arranged on the toolholder magazine where they do not cause any trouble. The solution also permits to establish service connections to the tool and particularly electric power feeding connections for feeding high power at low tension thanks to a high pressure electric contact system actuated by the coupling device itself simultaneously with the engagement of the tool.

In practice an operative plant will comprise several juxtaposed magazines, each with a different tool, the connection plate being identical in each case. Thus, the robot acquires the operative characteristics of a machining centre.

A preferred embodiment of the invention has been described which may be executed also in other forms. In particular, the actuator means for the crown, mounted on the magazine, may vary and may consist of any of the known devices for producing rotation of a rotatable member. Also the execution of the jaw clamping means may undergo variations, particularly on case of minor power to be handled. Non-essential parts of the mechanism may be omitted, for example, all or part of the connectors for service circuits or the electric power feed device where the tools used do not require power. All these and other modifications and variations to the described preferred embodiment are to be considered included within the scope of the invention as defined in the claims.

## Claims

1. Mechanism for automatic changing of tools for industrial robots with a head having several axes of movement and provided with a toolholder end flange, characterized in that it comprises:

a) a connection plate (80) firmly secured to the tool and having a projection (29) provided with a plurality of radial lugs (31) and a corresponding plurality of elastically compressible pressers (32, 33, 35) mounted respectively on each radial lug;

b) a device for coupling the tool to the robot by means of the connection plate, said device comprising a hollow cylinder (16) firmly anchored to the end flange of the head of the robot, said hollow cylinder comprising an annular surface (16a) adapted to abut against said projection of the connection plate of the tool and a cylindrical outer surface, on which a crown (40) is rotatably supported which frontally has a plurality of claws (38) adjacent said radial lugs of the connection plate and peripherally engagement means (41) engageable for rotating the crown by means of an external actuator from a first unlocked position to a second locked position and vice versa; said hollow cylinder (16) further comprising a plurality of front recesses (18) suitable to receive said plurality of elastically compressible pressers (32, 33, 35) to prevent relative rotation between said connection plate (80) and cylinder (16);

c) a toolholder magazine comprising a frame (90) adapted to be arranged in a predetermined fixed position with respect to the robot and to accommodate a tool with said connection plate in a predetermined position and having an actuator member (50, 51) adapted to engage said engagement means on the crown when the coupling device is in a position abutting said projection for rotating the crown from the unlocked position to the locked position and vice versa; so that by moving the coupling device frontally close to the connection plate of the tool located in the magazine, with the crown in the unlocked position, the claws are released by said radial lugs and the engagement means of the crown are gripped by said actuator member of the magazine, and so that, when the actuation of said actuator member moves the crown into the locked position, said claws move behind the radial lugs and grip the elastic pressers to create a reaction pressure between said annular surface of said hollow cylinder and the projection whereas actuation of the actuator member in the opposite direction moves the crown back into the unlocked position to release said claws and thus the coupling device from said connection plate.

2. Mechanism according to claim 1, characterized by the fact that said engagement means on said crown are constituted by a toothed segment (41) and the actuator member on the magazine is constituted by a rack (50) moved by the rod of an actuator cylinder (51) firmly secured to the frame and adapted to mesh with said toothed segment of the crown when the coupling device on the head moves frontally up to the connection plate accommodated in the magazine.

3. Mechanism according to claim 1 or 2, wherein the robot is of the type with two electric power feeding conductors (11) passing through the head, characterized by the fact that:

a) the hollow cylinder has in its central area a pair of plates (44a, 44b) provided with respective opposed electric contact surfaces extending parallel to the axis of the hollow cylinder, with said plates connected to said conductors, and respective claws (53, 55) each facing one of said plates and carried by pressure means (60, 61, 65, 65', 67, 67') mounted on the hollow cylinder and adapted to move the jaws against the plates under the action of the crown during the rotation between the unlocked position and the locked position; and

b) the connection plate of the tool carries a pair of electric contact plugs (46, 48) yieldingly supported in such positions as to be each inserted between a plate and a jaws when the coupling device moves frontally up to the connection plate of the tool with the crown in the unlocked position, to be compressed between the jaws and the plates as they move into the locked position of the crown.

4. Mechanism according to claim 3, characterized by the fact that said pressure means of the jaws comprise two rocker arms (67, 67') pivotally mounted in a fixed point of the hollow cylinder and each carrying at one end a respective jaw, the opposite ends of the rocker arms being articulated to respective struts (65, 65') connected to each other on a cam follower (60) slidably engaging a cam surface (61) firmly secured to the crown and adapted to cause compression of the struts during the rotation of the crown from the unlocked position to the locked position to move the jaws up to the plates.

5. Mechanism according to claim 3 or 4, characterized by the fact that said electric contact plugs of the tool are firmly secured to respective tabs (47, 49) accommodated in an aperture of the projection of the connection plate with the interposition of elastic elements (52) adapted to impart resiliency to the location of the plugs.

6. Mechanism according to one of claims 2 or 5, characterized by the fact that the rack carries tabs (94, 98) adapted to respectively engage surfaces (93, 95) of the connection plate when the latter is accommodated in the magazine and the rack is in the unlocked position, the tabs being released from said surfaces when the actuator cylinder is in the locked position.

7. Mechanism according to one of claims 1 to 6, characterized by the fact that each of said presser means comprises a cylindrical seat (32) firmly secured to a corresponding radial lug, in which a series of Belleville springs (35) acts upon a pressure ball (33).

8. Mechanism according to one of claims 1 to 7, characterized by the fact that the connection plate of the tool is supported in the magazine by frontal engagement of pins (91, 91') in holes (87, 87'), said pins and holes serving as reaction means against rotation of the crown (40).

9. Mechanism according to one of claims 1 to 8, characterized by the fact that the hollow cylinder and the flange of the connection plate of the tool have respective plugs and holes (72, 72', 77, 77') adapted to be coupled to one another when the coupling device moves up to the tool carried by the magazine, said plugs and holes serving as reaction means against the rotation of the crown (40).

10. Mechanism according to one of claims 1 to 9, characterized by the fact that the central area of said hollow cylinder and the central area of the projection of said connection plate comprise respective correspond ing connectors (74, 76, 84, 86) adapted to snugly fit one another as the coupling device is moved frontally up to the connection plate, said connectors being connected to respective auxiliary circuits of the robot and tool.

11. Mechanism according to claim 10, characterized by the fact that said connectors (74, 76) on the hollow cylinder are supported by a cylindrical body (19) accommodated in the central portion of the hollow cylinder.

12. Mechanism according to one of claims 1 to 11, characterized by the fact that there are three of each of said claws, said radial lugs and said pressers, spaced respectively at equal angles from one another around the axis of the hollow cylinder.

**Patentansprüche**

1. Automatischer Werkzeugwechsler für Industrieroboter, mit einem Kopf, der mehrere Bewegungsachsen besitzt und mit einem Werkzeughalter-Endflansch versehen ist, gekennzeichnet durch folgende Merkmale:
a) eine Verbindungsplatte (80), die mit dem Werkzeug fest verbunden ist und einen Vorsprung (29) aufweist, der mit mehreren radialen Nasen (31) und einer entsprechenden Anzahl elastisch zusammendrückbarer Anpreßeinheiten (32, 33, 35) versehen ist, von denen je eine an jeder radialen Nase angebracht ist;
b) eine Vorrichtung zum Verbinden des Werkzeuges mit dem Roboter mittels der Verbindungsplatte, wobei die genannte Vorrichtung einen Hohlzylinder (16) aufweist, der an dem Endflansch des Kopfes des Roboters fest verankert und mit einer Ringfläche (16a), die für die Anlage an dem genannten Vorsprung der Verbindungsplatte des Werkzeuges vorgesehen ist, sowie mit einer zylindrischen Außenfläche versehen ist, auf der ein Kranz (40) drehbar gelagert ist, der frontseits mehrere Klauen (38) in der Nähe der genannten radialen Nasen der Verbindungsplatte und am Umfang Greifmittel (41) aufweist, die greifbar sind, um den Kranz mittels eines externen Betätigers aus einer ersten, entriegelten Stellung in eine zweite, verriegelte Stellung und zurück zu drehen; wobei der Hohlzylinder (16) außerdem mehrere vordere Aussparungen (18) besitzt, in denen die genannten elastisch zusammendrückbaren Anpreßeinheiten (32, 33, 35) aufnehmbar sind, um eine Relativdrehung zwischen der genannten Verbindungsplatte (80) und dem Zylinder (16) zu verhindern.
c) ein Werkzeughaltermagazin mit einem Rahmen (90), das in eine vorbestimmte, feste Position bezüglich des Roboters gebracht werden kann, zur Aufnahme eines Werkzeuges mit in vorbestimmter Stellung befindlicher Verbindungsplatte vorgesehen ist und ein Betätigungsglied (50, 51) aufweist, das mit den genannten Greifmitteln an dem Kranz in Eingriff bringbar ist, wenn die Verbindungsvorrichtung in einer sich an dem genannten Vorsprung abstützenden Lage ist, um den Kranz aus der entriegelten Stellung in die verriegelte Stellung und zurück zu drehen; so daß durch frontales Bewegen der Verbindungsvorrichtung eng an die Verbindungsplatte des in dem Magazin in Stellung gebrachten Werkzeuges bei in der entriegelten Stellung befindlichem Kranz die Klauen von den genannten radialen Nasen freigegeben und die Greifmittel des Kranzes durch das genannte Betätigungsglied des Magazins ergriffen werden und, wenn durch die Betätigung des genannten Betätigungsgliedes der Kranz in die verriegelte Stellung bewegt wird, sich die Klauen hinter die radialen Nasen bewegen und die elastischen Anpreßeinheiten erfassen, um einen Reaktionsdruck zwischen der genannten Ringfläche des genannten Hohlzylinders und dem Vorsprung zu erzeugen, während durch die Betätigung des Betätigungsgliedes in der entgegengesetzten Richtung der Kranz in die entriegelte Stellung zurückbewegt wird, um die genannten Klauen und damit die Verbindungsvorrichtung von der genannten Verbindungsplatte zu lösen.

2. Werkzeugwechsler nach Anspruch 1, dadurch gekennzeichnet, daß die genannten Greifmittel an dem genannten Kranz durch ein Zahnsegment (41) und das Betätigungsglied an dem Magazin durch eine Zahnstange (50) gebildet sind, die durch die Stange eines am Rahmen fest angebrachten Betätigungszylinders (51) bewegbar und mit dem genannten Zahnsegment des Kranzes in Eingriff bringbar ist, wenn die Verbindungsvorrichtung an dem Kopf sich frontal bis zu der Verbindungsplatte bewegt, die in dem Magazin aufgenommen ist.

3. Werkzeugwechsler nach Anspruch 1 oder 2, bei dem der Roboter zu der Art gehört, bei der zwei elektrische Leiter (11) für eine Zufuhr elektrischer Energie sich durch den Kopf hindurch erstrecken, dadurch gekennzeichnet, daß:

a) der Hohlzylinder in seinem Zentralbereich zwei Platten (44a, 44b) aufweist, die mit voneinander abgekehrten elektrischen Kontaktflächen versehen sind, die sich parallel zur Achse des Hohlzylinders erstrecken und mit den genannten Leitern verbunden sind, wobei zugeordnete Klemmbakken (53, 55), von denen jede je einer der genannten Platten zugekehrt und durch Anpreßmittel (60, 61, 65, 65', 67, 67') gehalten sind, die am Hohlzylinder angeordnet und dazu vorgesehen sind, um die Klemmbacken gegen die Platten unter Einwirkung des Kranzes bei seiner Drehung zwischen der entriegelten Stellung und der verriegelten Stellung zu bewegen; und daß

b) die Verbindungsplatte des Werkzeuges zwei elektrische Kontaktstücke (46, 48) trägt, die in solchen Positionen nachgiebig gelagert sind, daß jedes von ihnen zwischen eine Platte und eine Klemmbacke eingreift, wenn die Verbindungsvorrichtung sich bei in der entriegelten Stellung befindlichem Kranz frontal bis zu der Verbindungsplatte des Werkzeuges bewegt, um zwischen den Platten und den Klemmbacken festgeklemmt zu werden, wenn diese sich in die der verriegelten Stellung des Kranzes entsprechende Stellung bewegen.

4. Werkzeugwechsler nach Anspruch 3, dadurch gekennzeichnet, daß die genannten Anpreßmittel der Klemmbacken zwei Kipphebel (67, 67') aufweisen, die in je einem Festpunkt am Hohlzylinder schwenkbar angebracht sind und von denen jeder an einem Ende eine zugeordnete Klemmbacke trägt, wobei die entgegengesetzten Enden der Kipphebel an zugeordneten Druckstangen (65, 65') angelenkt sind, die an einem Nockentaster (60) miteinander verbunden sind, der auf einer Nockenfläche (61) gleitet, die fest am Kranz angebracht und dazu vorgesehen ist, ein Zusammendrücken der Druckstangen während der Drehung des Kranzes aus der entriegelten Stellung in die verriegelte Stellung hervorzurufen, um die Klemmbacken gegen die Platten zu bewegen.

5. Werkzeugwechsler nach Anspruch 3 oder 4, dadurch gekennzeichnet, daß die genannten elektrischen Kontaktstücke des Werkzeugs an ihnen zugeordneten Haltern (47, 49) fest angebracht sind, die in einer Öffnung des Vorsprungs der Verbindungsplatte unter Zwischenfügen elastischer Glieder (52) aufgenommen sind, die der Lageanordnung der Kontaktstücke eine Nachgiebigkeit vermitteln.

6. Werkzeugwechsler nach einem der Ansprüche 2 oder 5, dadurch gekennzeichnet, daß die Zahnstange Ansätze (94, 98) trägt, die mit Anlageflächen (93 bzw. 95) der Verbindungsplatte in Eingriff bringbar sind, wenn letztere im Magazin aufgenommen und die Zahnstange in der entriegelten Stellung ist, wobei die Ansätze mit den genannten Anlageflächen außer Eingriff sind, wenn der Betätigungszylinder in der verriegelten Stellung ist.

7. Werkzeugwechsler nach einem der Ansprüche 1 bis 6, dadurch gekennzeichnet, daß jede der Anpreßeinheiten einen zylindrischen Sitz (32) aufweist, der an einer zugeordneten radialen Nase fest angebracht ist und in dem eine Gruppe von Tellerfedern (35) auf eine Druckkugel (33) einwirkt.

8. Werkzeugwechsler nach einem der Ansprüche 1 bis 7, dadurch gekennzeichnet, daß die Verbindungsplatte des Werkzeugs in dem Magazin durch frontalen Eingriff von Stiften (91, 91') in Bohrungen (87, 87') gehalten ist, wobei die genannten Stifte und Bohrungen als Reaktionsmittel gegen die Drehung des Kranzes (40) dienen.

9. Werkzeugwechsler nach einem der Ansprüche 1 bis 8, dadurch gekennzeichnet, daß der Hohlzylinder und der Flansch der Verbindungsplatte des Werkzeugs Stifte bzw. Bohrungen (72, 72', 77, 77') aufweist, die miteinander kuppelbar sind, wenn die Verbindungsvorrichtung sich zu dem im Magazin gehaltenen Werkzeug bewegt, und daß die genannten Stifte und Bohrungen als Reaktionsmittel gegen die Drehung des Kranzes (40) dienen.

10. Werkzeugwechsler nach einem der Ansprüche 1 bis 9, dadurch gekennzeichnet, daß der Zentralbereich des genannten Hohlzylinders und der Zentralbereich des Vorsprungs der genannten Verbindungsplatte entsprechende zugeordnete Verbinder (74, 76, 84, 86) aufweisen, die miteinander in Dichtverbindung kommen, wenn die Verbindungsvorrichtung frontal an die Verbindungsplatte bewegt wird, wobei die genannten Verbinder an zugehörige Hilfssysteme des Roboters und des Werkzeuges angeschlossen sind.

11. Werkzeugwechsler nach Anspruch 10, dadurch gekennzeichnet, daß die genannten Verbinder (74, 76) am Hohlzylinder von einem zylindrischen Körper (19) gehalten sind, der in dem zentralen Abschnitt des Hohlzylinders angeordnet ist.

12. Werkzeugwechsler nach einem der Ansprüche 1 bis 11, dadurch gekennzeichnet, daß je drei der genannten Klauen der genannten radialen Nasen und der genannten Anpreßeinheiten vorhanden und jeweils in gleichen Winkelabständen voneinander rings um die Achse des Hohlzylinders angeordnet sind.

**Revendications**

1. Mécanisme pour le changement automatique d'outils pour des robots industriels comportant une tête possédant plusieurs axes de déplacement et comportant une bride d'extrémité de support d'outil, caractérisé en ce qu'il comporte:

a) une plaque de raccordement (80) fermement fixée à l'outil et possédant une partie saillante (29) comportant une pluralité de pattes radiales (31) et une pluralité correspondante de doigts presseurs (32, 33, 35) compressibles élastiquement et montés respectivement sur chaque patte radiale;

b) un dispositif pour accoupler l'outil au robot au moyen de la plaque de raccordement, ledit dispositif comprenant un cylindre creux (16) accroché fermement sur la bride d'extrémité de la tête du robot, ledit cylindre creux comprenant une surface annulaire (16a) adaptée pour venir en butée contre ladite partie saillante de la plaque de raccordement de l'outil, et une surface extérieure cylindrique, qui supporte, de manière qu'elle puisse tourner, une couronne (40), qui possède, sur son côté avant, une pluralité de griffes (38) voisines desdites pattes radiales de la plaque de raccordement, et des moyens d'engrènement périphérique (41), avec lesquels un actionneur extérieur peut engrener, pour faire tourner la couronne depuis une première position déverrouillié jusque dans une seconde position verrouillée et vice versa, ledit cylindre creux (16) comportant en outre une pluralité de renfoncements frontaux (18) aptes à recevoir ladite pluralité de doigts presseurs (32, 33, 35) compressibles élastiquement pour empêcher une rotation relative entre ladite plaque de raccordement (80) et le cylindre (16);

c) un magasin de support d'outil comprenant un cadre (90) adapté pour être placé dans une position fixe prédéterminée par rapport au robot et pour loger un outil muni de ladite plaque de raccordement dans une position prédéterminée, et comportant un organe formant actionneur (50, 51) adapté pour engrener avec lesdits moyens d'engrènement situés sur la couronne lorsque le dispositif d'accouplement est dans une position en butée contre ladite partie saillante de manière à faire tourner la couronne depuis la position déverrouillée jusque dans la position verrouilliée et vice versa;

de sorte que sous l'effet du déplacement frontal du dispositif d'accouplement, amenant ce dernier à proximité de la plaque de raccordement de l'outil situé dans le magasin, la couronne étant dans la position déverrouillée, les griffes sont libérées par lesdites pattes radiales et les moyens d'engrènement de la couronne sont saisis par ledit organe formant actionneur du magasin, et de sorte que, lorsque l'actionnement dudit organe formant actionneur amène la couronne dans la position verrouillée, lesdites griffes se placent derrière les pattes radiales de saisissen les doigts presseurs élastiques de manière à creer une pression de réaction entre ladite surface annulaire dudit cylindre creux et la partie saillante, tandis que l'actionnement de l'organe formant actionneur dans la direction opposée ramène la couronne dans la position déverrouillée de manière à libérer lesdites griffes et par conséquent le dispositif d'accouplement, de ladite plaque de raccordement.

2. Mécanisme selon la revendication 1, caractérisé par le fait que lesdits moyens d'engrènement situés sur ladite couronne sont constitués par un segment denté (41) et que l'organe formant actionneur situé sur le magasin est constitué par une crémaillère (50) déplacée par la tige d'un vérin d'actionneur (51), fixé fermement au cadre, et adaptée pour engrener avec ledit segment denté de la couronne lorsque le dispositif d'accouplement situé sur la tête se déplace frontalement jusqu'à la plaque de raccordement logée dans le magasin.

3. Mécanisme selon la revendication 1 ou 2, dans lequel le robot est du type comportant deux conducteurs (11) d'alimentation en énergie électrique traversant le tête, caractérisé par le fait que:

a) le cylindre creux comporte, dans sa partie centrale, un couple de plaques (44a, 44b) possédant des surfaces respectives opposés de contact électrique, qui s'étendent parallèlement à l'axe du cylindre creux, lesdites plaques étant raccordées auxdits conducteurs, et des mâchoires respectives (53, 55), dont chacune fait face à l'une desdites plaques et qui sont portées par des moyens d'application de pression (60, 61, 65, 65', 67, 67') montés sur le cylindre creux et adaptés pour appliquer les mâchoires contre les plaques sous l'action de la couronne au cours de la rotation entre la position déverrouillée et la position verrouillée; et

b) la plaque de raccordement de l'outil porte un couple de fiches de contact électrique (46, 48) supportées élastiquement dans des positions telles que chacune est insérée entre une plaque et une mâchoire lorsque le dispositif d'accouplement se déplace frontalement jusqu'à la plaque de raccordement de l'outil, la couronne étant dans la position déverrouillée, de sorte que les fiches sont comprimées entre les mâchoires et les plaques lorsqu'elles se déplacent pour venir dans la position, dans laquelle la couronne est verrouillée.

4. Mécanisme selon la revendication 3, caractérisé par le fait que lesdits moyens d'application de pression des mâchoires comprennent deux bras oscillants (67, 67'), qui sont montés pivotants en un point fixe du cylindre creux et dont chacun porte, à une extrémité, une mâchoire respective, les extrémités opposées des bras oscillants étant articulées sur des entretoises respectives (65, 65') raccordées l'une à l'autre sur un élément suiveur de came (60) glissant sur une surface de came (61) fixée fermement à la couronne et adapté pour provoquer une compression des entretoises pendant la rotation de la couronne depuis la position déverrouillée jusqué dans la position verrouillée, de manière à déplacer les mâchoires jusqu'aux plaques.

5. Mécanisme selon la revendication 3 ou 4, caratérisé par le fait que lesdites fiches électriques de contact de l'outil sont fixées fermement à des pattes respectives (47, 49) logées dans une ouverture de la partie saillante de la plaque de raccordement moyennant le montage intercalé d'éléments élastiques (52) adaptées pour produire une élasticité de positionement des fiches.

6. Mécanisme selon l'une des revendications 2 ou 5, caractérisé par le fait que le crémaillère porte des pattes (94, 98) adaptées pour venir respectivement en contact avec des surfaces (93, 95) de la plaque de raccordement, lorsque cette dernière est logée dans le magasin et que la crémaillère est dans la position déverrouillée, les pattes étant écartées desdites surfaces lorsque le vérin de l'actionneur est dans la position verrouillée.

7. Mécanisme selon l'une des revendications 1 à 6, caractérisé par le fait que chacun desdits moyens presseurs comporte un siège cylindrique (32) fixé fermement à une patte radiale correspondante et dans lequel une série de ressorts Belleville (35) agissent sur une bille de pression (33).

8. Mécanisme selon l'une des revendications 1 à 7, caractérisé par le fait que la plaque de raccordement de l'outil est supportée dans le magasin grâce à l'engagement frontal de tétons (91, 91') dans des trous (87, 87'), lesdits tétons et lesdits trous étant utilisés comme moyens de réaction à l'encontre d'une rotation de la couronne (40).

9. Mécanisme selon l'une des revendications 1 à 8, caractérisé par le fait que le cylindre creux et la bride de la plaque de raccordement de l'outil comportent des broches et des trous respectifs (72, 72', 77, 77'), adaptés pour être accouplés entre eux lorsque le dispositif d'accouplement se déplace jusqu'à l'outil porté par le magasin, lesdites broches et lesdites trous étant utilisés comme moyens de réaction à l'encontre de la rotation de la couronne (40).

10. Mécanisme selon l'une des revendications 1 à 9, caractérisé par le fait que la zone centrale dudit cylindre creux et la zone centrale de la partie saillante de ladite plaque de raccordement comportent des connecteurs correspondants respectifs (74, 76, 84, 86) agencés pour s'adapter étroitement les uns aux autres lorsque le dispositif d'accouplement est déplacé frontalement jusqu'à la plaque de raccordement, lesdits connecteurs étant raccordés à des circuits auxiliaires respectifs du robot et de l'outil.

11. Mécanisme selon la revendication 10, caractérisé par le fait que lesdits connecteurs (74, 76) situés sur le cylindre creux sont supportés par un corps cylindrique (19) logé dans la partie centrale du cylindre creux.

12. Mécanisme selon l'une des revendications 1 à 11, caractérisé par le fait que lesdites griffes, lesdites pattes radiales et lesdites doigts presseurs sont prévus chacun en triple, en étant séparés respectivement les une des autres par des angles identiques autour de l'axe du cylindre creux.

**FIG.1**

**FIG. 2**

**FIG. 3**

FIG.4

3

FIG.5

**FIG.6**

## FIG.7

## FIG.9

**FIG.8**

FIG. 10

FIG.11

*FIG. 12*